# EUROPEAN PATENT SPECIFICATION

(11) **EP 3 467 668 B1**
(45) Date of publication and mention of the grant of the patent: **16.12.2020**
(21) Application number: 17819132.6
(22) Date of filing: 19.06.2017
(51) Int. Cl.: G06F 16/00, G06F 12/08, G06F 16/23

(54) **METHOD FOR PROCESSING DATABASE TRANSACTION, CLIENT AND SERVER**
VERFAHREN ZUR VERARBEITUNG EINER DATENBANKTRANSAKTION, CLIENT UND SERVER
PROCÉDÉ DE TRAITEMENT DE TRANSACTION DE BASE DE DONNÉES, CLIENT ET SERVEUR

(30) Priority: 30.06.2016 CN 201610496073
(43) Date of publication of application: 10.04.2019
(60) Divisional application: 20193492.4
(73) Proprietor: Huawei Technologies Co., Ltd., Longgang District Shenzhen, Guangdong 518129 (CN)
(72) Inventor: PENG, Yongfei, Shenzhen Guangdong 518129 (CN)
(74) Representative: Pfenning, Meinig & Partner mbB
(86) International application number: PCT/CN2017/089035
(87) International publication number: WO 2018/001135

(56) References cited:
- CN-A- 103 744 936
- CN-A- 104 333 512
- CN-A- 105 243 067
- US-A1- 2006 010 130
- US-A1- 2016 147 906
- US-A1- 2016 171 002
- MICHAEL J. CAREY ET AL: "The performance of multiversion concurrency control algorithms", ACM TRANSACTIONS ON COMPUTER SYSTEMS (TOCS), vol. 4, no. 4, 1 September 1986 (1986-09-01), pages 338-378, XP055570361, US ISSN: 0734-2071, DOI: 10.1145/6513.6517
- LIU, LIXI: "Research on Transaction Control Mechanism in High Concurrent Environment", ELECTRONIC TECHNOLOGY & INFORMATION SCIENCE , CHINA MASTER'S THESES FULL-TEXT DATABASE, 15 September 2015 (2015-09-15), pages 1-48, XP009511601, ISSN: 1674-0246

## Description

This application claims priority to Chinese Patent Application No. 201610496073.3, filed with the Chinese Patent Office on June 30, 2016 and entitled "DATABASE TRANSACTION PROCESSING METHOD, CLIENT, AND SERVER".

### TECHNICAL FIELD

The present application relates to the field of database technologies, and more specifically, to a database transaction processing method, a client, and a server.

### BACKGROUND

When multiple users access a database simultaneously, multiple transactions may concurrently operate a same piece of data. If such concurrent operations are not controlled, incorrect data may be accessed in the database. Consequently, transaction-database consistency is damaged.

Locking is a very important technology to implement concurrency control. The so-called locking means that before operating data, a transaction T first sends, to a system, a request for locking the data, and then the transaction T has some control over the data after a lock is applied, and another transaction cannot operate the data before the transaction T releases the lock of the data. A size of a locked object is referred to as a locking granularity. The locked object may be a logical unit or a physical unit. The locking technology is also referred to as a lock (Lock) mechanism.

In the lock mechanism, read blocks write, and write blocks read. When the locking granularity is relatively large, real-timeness of database access is reduced, resulting in relatively large blocking during modification of a same piece of data. In addition, because a conflict between reading and writing a same piece of data blocks a function for a long time, a deadlock is easily generated, so that deadlock detection needs to be periodically performed.

In a current technology, to resolve the problem with the lock mechanism, a Multi-Version Concurrency Control (Multiversion Concurrency Control, MVCC) transaction mechanism is proposed. Generally, a lock-based concurrency control mechanism is referred to as a pessimistic mechanism, and the MVCC mechanism is referred to as an optimistic mechanism.
In the MVCC, multiple versions are maintained for a same piece of data (each version is corresponding to one time stamp). That is, each modification and committing of this data generates a new version, and time stamps (or version numbers) or transaction identifiers IDs are used to serialize the multiple versions of the same piece of data. A transaction T that needs to perform a read operation on the data may always provide a version with a time stamp consistent with a start time of the transaction T. Regardless of how long this transaction T is executed, the transaction T always sees a same version of the data. Even if the data is modified by another transaction during the execution of the transaction T, no "dirty" read or phantom read is to occur on the transaction T. Therefore, by maintaining multiple versions for dame data, the MVCC implements that a read operation and a write operation are concurrent without affecting each other, and multiple read operations can be concurrent without affecting each other. However, a conflict between concurrent write operations cannot be resolved by means of maintaining multiple versions for a same piece of data. In the MVCC, a conflict between write operations is still resolved by means of locking. If one transaction performs a write operation on one piece of data, the data is locked, and another transaction cannot operate the data before the transaction releases the lock of the data. That is, multiple operations are serially performed. Therefore, no conflict occurs.
US 2006/0010130 A1 discloses a method for synchronization of client transactions executed by an autonomous client. The method enables a client operate on a limited connection to a server to log transactions executed against a locally stored server database state. Logged transactions are then synchronized with a current server database state by delivering the transaction log to the server. The server re-executes each logged client transaction against the current server database state, thereby reducing synchronization-related transaction conflicts. Carey et al., in "The performance of multiversion concurrency control algorithms" describes a simulation study of the performance of several multiversion concurrency control algorithms, investigating the extent to which they provide increases the level of concurrency and also the CPU, I/O, and storage costs resulting the use of multiple versions.

It can be learned from the above that, compared with the conventional lock mechanism, the existing MVCC mechanism prevents read from blocking write and write from blocking read, but still cannot prevent write from blocking write. In addition, in the existing MVCC technology, because multiple versions of a same piece of data need to be stored, database storage management is relatively complex. Further, it is necessary to purge versions no longer needed periodically to reclaim space, resulting in additional overheads.

### SUMMARY

The present application provides a database transaction processing method, a client, and a server, so as to implement a lock-free transaction mechanism that can support multiple concurrent read operations and/or write operations and reduce database storage management complexity.

According to a first aspect, a database transaction processing method according to claim 1 is provided.

In the technical solution of the present application, the server stores only the last committed updated version of the target data. Therefore, the version of the target data that is currently stored in the server is naturally the last committed updated version of the target data.

The version of the target data that is currently stored in the server described in the present application is a dynamic concept. For example, at a time t1, the version of the target data that is currently stored in the server is a version of the target data that is stored in the server at a current time corresponding to t1; and at a time t2, the version of the target data that is currently stored in the server is a version of the target data that is stored in the server at a current time corresponding to t2.

The last committed updated version of the target data is a version that is after a modification operation of a to-be-committed transaction is last performed on the target data, that is, the last committed updated version of the target data makes true consistency between the transaction and a database.

That there is no data conflict between the data operation of the first transaction and the version of the target data that is currently stored in the server means that there is no conflict between the data operation of the first transaction and a last modification operation of the version of the target data that is currently stored in the server, so that transaction-database consistency is not damaged when the version of the target data that is currently stored in the server is modified according to the data operation of the first transaction.

In the technical solution of the present application, after receiving the database access request that requests the target data and that is sent by the client, the server sends the first version of the target data to the client, where the first version is the version of the target data that is currently stored in the server, and the version is the last committed updated version of the target data, so that a transaction can be executed in a client cache based on the first version; and when receiving the transaction committing request sent by the client, the server modifies, according to a data operation of a to-be-committed transaction when it is determined that there is no data conflict between the data operation of the to-be-committed transaction and the version of the target data that is currently stored in the server, the version of the target data that is currently stored in the server, and obtains the committed updated version of the target data, so as to complete committing of the transaction. It should be understood that sending the first version of the target data to the client so that the transaction is executed in the client ensures isolation between concurrent transactions, that is, there is no impact between concurrent read operations, no impact between concurrent read and write operations, and no impact between concurrent write operations. Committing of the transaction is executed, only when the server commits the transaction and it is determined that there is no data conflict between the data operation of the to-be-committed transaction and the version of the target data that is currently stored in the server. This ensures transaction-database consistency. In addition, the transaction is executed in the client based on the first version of the target data, so that the server does not need to maintain multiple versions of the target data, but only needs to maintain the last committed updated version of the target data. Compared with the existing MVCC technology, the present application can effectively reduce database storage management complexity, and ease a server storage burden. Therefore, the present application provides a lock-free transaction mechanism capable of supporting multiple concurrent read operations and/or write operations, so as to effectively reduce database storage management complexity.

With reference to the first aspect, in a first possible implementation of the first aspect, the data operation of the first transaction includes an insertion operation, and the log includes a primary key (Primary Key) corresponding to the insertion operation; and the method further includes: when the primary key does not exist in the version of the target data that is currently stored in the server, determining, by the server, that there is no data conflict between the data operation of the first transaction and the version of the target data that is currently stored in the server.

Specifically, that the primary key corresponding to the insertion operation does not exist in the version of the target data that is currently stored in the server means that values of primary keys of all records in the version of the target data that is currently stored in the server are different from a value of the primary key corresponding to the insertion operation.

It should be understood that the primary key (Primary Key) is usually one or more fields in a table, and a value of the primary key is used to uniquely identify a record in the table. The primary key is a unique key, and is a part defined in the table. The value of the primary key is not replicable. For example, when adding a new record to the table, a relational database management system Microsoft Office Access automatically checks a value of a primary key of the new record, and does not allow the value of the primary key of the new record to replicate a value of a primary key of another record in the table. The primary key cannot be null (NULL). The primary key can be used to accelerate a database operation.

Therefore, in the technical solution of the present application, when the primary key corresponding to the insertion operation does not exist in the version of the target data that is currently stored in the server, it indicates that a record of an operation same as the insertion operation of the first transaction does not exist in the version of the target data that is currently stored in the server. Therefore, there is no data conflict between the data operation of the first transaction and the version of the target data that is currently stored in the server.

In a first possible implementation of the first aspect, when it is determined that the primary key corresponding to the insertion operation exists in the version of the target data that is currently stored in the server, the server determines that there is a data conflict between the data operation of the first transaction.

It should be understood that when the primary key corresponding to the insertion operation exists in the version of the target data that is currently stored in the server, it indicates that a record of an operation same as the insertion operation of the first transaction already exists in the version of the target data that is currently stored in the server. Therefore, there is a data conflict between the data operation of the first transaction and the version of the target data that is currently stored in the server.

With reference to the first aspect, in a second possible implementation of the first aspect, the data operation of the first transaction includes an update operation or a deletion operation, and the transaction committing request further includes a time stamp of the first version; and the method further includes: when a time stamp of the version of the target data that is currently stored in the server is consistent with the time stamp of the first version, determining, by the server, that there is no data conflict between the data operation of the first transaction and the version of the target data that is currently stored in the server.

Each time when the target data is modified, a corresponding new version is generated, and accordingly, a corresponding time stamp is set. If time stamps of two versions of the target data are the same, it indicates that these two versions are a same version of the target data.

Therefore, in the technical solution of the present application, when the time stamp of the version of the target data that is currently stored in the server is consistent with the time stamp of the first version, it indicates that the version of the target data that is currently stored in the server is the same version as the first version. That is, the target data stored in the server is not modified by another transaction from when the server sends the first version to the client to when the server receives the transaction committing request. Therefore, there is no data conflict between the data operation (that is, the update operation or the deletion operation) of the first transaction and the version of the target data that is currently stored in the server.

In a second possible implementation of the first aspect, when it is determined that a time stamp of the version of the target data that is currently stored in the server is inconsistent with the time stamp of the first version, the server determines that there is a data conflict between the data operation of the first transaction and the version of the target data that is currently stored in the server.

That the time stamp of the version of the target data that is currently stored in the server is inconsistent with the time stamp of the first version, indicates that the target data stored in the server is already modified by another transaction from when the server sends the first version to the client to when the server receives the transaction committing request. In this case, transaction-database consistency is damaged if the version of the target data that is currently stored in the server is modified according to the data operation of the first transaction. Therefore, it is considered that when the time stamp of the version of the target data that is currently stored in the server is inconsistent with the time stamp of the first version, there is a data conflict between the data operation of the first transaction and the version of the target data that is currently stored in the server.

With reference to any one of the first aspect, or the first to the second possible implementations of the first aspect, in a third possible implementation of the first aspect, after the obtaining, by the server, a committed updated version of the target data, the method further includes: setting, by the server, a new time stamp for the committed updated version of the target data.

It should be further understood that if the server receives, after the server commits the first transaction, a database access request of another client that is used to request the target data, the server sends a second version of the target data to the another client, where the second version is a version that is after the target data is modified according to the data operation of the first transaction. It should be understood that a time stamp of the second version of the target data is different from the time stamp of the first version of the target data.

With reference to any one of the first aspect, or the first to the second possible implementations of the first aspect, in a third possible implementation of the first aspect, the method further includes: when it is determined that there is no data conflict between the data operation of the first transaction and the version of the target data that is currently stored in the server, sending, by the server to the client, a response used to indicate that committing of the first transaction is invalid.

In the foregoing implementations, the server may receive database access requests of multiple clients that are used to request the target data, and according to a data access request of each client, send one corresponding version of the target data to each client. When receiving a transaction committing request sent by each client, the server completes committing of a corresponding transaction when it is determined that there is no data conflict between a data operation of a to-be-committed transaction and the version of the target data that is currently stored in the server. Specifically, for example, the server receives, at a first time t1, a database access request of a first client that is used to request target data; and the server sends a first version of the target data to the first client, where the first version is a version of the target data that is currently stored in the server. The server receives, at a second time t2, a database access request of a second client that is used to request target data; and the server sends a second version of the target data to the second client, where the second version is a version of the target data that is currently stored in the server. It should be understood that the first version and the second version may be the same or may be different. It is assumed that the first time t1 is earlier than the second time t2. If the target data stored in the server is not modified from the first time t1 to the second time t2, the first version and the second version are a same version. If the target data stored in the server is modified by another transaction from the first time t1 to the second time t2, the first version and the second version are different versions, that is, a time stamp of the first version is different from a time stamp of the second version. When receiving a transaction committing request of the first client or the second client, the server determines whether there is a data conflict for a data operation of a to-be-committed transaction, so as to determine whether to commit the transaction.

According to a second aspect, a database transaction processing method according to claim 6 is provided.

In the technical solution of the present application, after receiving the database access request that requests the target data and that is sent by the client, the server sends the first version of the target data to the client, where the first version is the version of the target data that is currently stored in the server, and the version is the last committed updated version of the target data, so that a transaction can be executed in a client cache based on the first version; and when receiving the transaction committing request sent by the client, the server modifies, according to a data operation of a to-be-committed transaction when it is determined that there is no data conflict between the data operation of the to-be-committed transaction and the version of the target data that is currently stored in the server, the version of the target data that is currently stored in the server, and obtains the committed updated version of the target data, so as to complete committing of the transaction. It should be understood that sending the first version of the target data to the client so that the transaction is executed in the client ensures isolation between concurrent transactions, that is, there is no impact between concurrent read operations, no impact between concurrent read and write operations, and no impact between concurrent write operations. Committing of the transaction is executed, only when the server commits the transaction and it is determined that there is no data conflict between the data operation of the to-be-committed transaction and the version of the target data that is currently stored in the server. This ensures transaction-database consistency. In addition, the transaction is executed in the client based on the first version of the target data, so that the server does not need to maintain multiple versions of the target data, but only needs to maintain the last committed updated version of the target data. Compared with the existing MVCC technology, the present application can effectively reduce database storage management complexity, and ease a server storage burden. Therefore, the present application provides a lock-free transaction mechanism capable of supporting multiple concurrent read operations and/or write operations, so as to effectively reduce database storage management complexity.

With reference to the second aspect, in a first possible implementation of the second aspect, the data operation of the first transaction includes an insertion operation, and the log includes a primary key corresponding to the insertion operation.

Specifically, the primary key is used by the server to determine whether there is a data conflict for the data operation of the first transaction. For a specific method, refer to the foregoing description. Details are not described herein.

With reference to the second aspect, in a first possible implementation of the second aspect, the data operation of the first transaction includes an update operation or a deletion operation, and the transaction committing request further includes a time stamp of the first version.

Specifically, the transaction committing request includes the time stamp of the first version, for the server to determine whether there is a data conflict for the data operation of the first transaction. For specifics of the method, refer to the foregoing description. Details are not described herein again.

According to a third aspect, a server is provided, where the server is configured to perform the method according to any one of the first aspect or the possible implementations of the first aspect.

Specifically, the server may include a module configured to perform the method according to any one of the first aspect or the possible implementations of the first aspect.

According to a fourth aspect, a client is provided, where the client is configured to perform the method according to any one of the second aspect or the possible implementations of the second aspect.

Specifically, the client may include a module configured to perform the method according to any one of the second aspect or the possible implementations of the second aspect.

According to a fifth aspect, a server is provided, including: a transceiver and a lock-free memory storage engine, where: the transceiver is configured to receive a database access request sent by a client, where the database access request is used to request target data; the transceiver is further configured to send a first version of the target data to the client based on the database access request, where the first version is a version of the target data that is currently stored in the server, and the server stores only a last committed updated version of the target data; the transceiver is further configured to receive a transaction committing request sent by the client after the client executes a first transaction based on the first version, where the transaction committing request is used to request to commit the first transaction, and the transaction committing request includes a log used to record a data operation of the first transaction; and the lock-free memory storage engine is configured to: modify, according to the log and the data operation of the first transaction when it is determined that there is no data conflict between the data operation of the first transaction and the version of the target data that is currently stored in the server, the version of the target data that is currently stored in the server, and obtain a committed updated version of the target data, so as to complete committing of the first transaction.

In the technical solution of the present application, after receiving the database access request that requests the target data and that is sent by the client, the server sends the first version of the target data to the client, where the first version is the version of the target data that is currently stored in the server, and the version is the last committed updated version of the target data, so that a transaction can be executed in a client cache based on the first version; and when receiving the transaction committing request sent by the client, the server modifies, according to a data operation of a to-be-committed transaction when it is determined that there is no data conflict between the data operation of the to-be-committed transaction and the version of the target data that is currently stored in the server, the version of the target data that is currently stored in the server, and obtains the committed updated version of the target data, so as to complete committing of the transaction. It should be understood that sending the first version of the target data to the client so that the transaction is executed in the client ensures isolation between concurrent transactions, that is, there is no impact between concurrent read operations, no impact between concurrent read and write operations, and no impact between concurrent write operations. Committing of the transaction is executed, only when the server commits the transaction and it is determined that there is no data conflict between the data operation of the to-be-committed transaction and the version of the target data that is currently stored in the server. This ensures transaction-database consistency. In addition, the transaction is executed in the client based on the first version of the target data, so that the server does not need to maintain multiple versions of the target data, but only needs to maintain the last committed updated version of the target data. Compared with the existing MVCC technology, the present application can effectively reduce database storage management complexity, and ease a server storage burden. Therefore, the present application provides a lock-free transaction mechanism capable of supporting multiple concurrent read operations and/or write operations, so as to effectively reduce database storage management complexity.

With reference to the third aspect, in a first possible implementation of the third aspect, the data operation of the first transaction includes an insertion operation, and the log includes a primary key corresponding to the insertion operation; and the lock-free memory storage engine is further configured to: when the primary key does not exist in the version of the target data that is currently stored in the server, determine that there is no data conflict between the data operation of the first transaction and the version of the target data that is currently stored in the server.

With reference to the third aspect, in a second possible implementation of the third aspect, the data operation of the first transaction includes an update operation or a deletion operation, and the transaction committing request further includes a time stamp of the first version; and the lock-free memory storage engine is further configured to: when a time stamp of the version of the target data that is currently stored in the server is consistent with the time stamp of the first version, determine that there is no data conflict between the data operation of the first transaction and the version of the target data that is currently stored in the server.

With reference to any one of the third aspect, or the first to the second possible implementations of the third aspect, in a third possible implementation of the third aspect, the lock-free memory storage engine is further configured to: after the server obtains a committed updated version of the target data, set a new time stamp for the committed updated version of the target data.

With reference to any one of the third aspect, or the first to the third possible implementations of the third aspect, in a fourth possible implementation of the third aspect, the transceiver is configured to: when it is determined that there is no data conflict between the data operation of the first transaction and the version of the target data that is currently stored in the server, send, to the client, a response used to indicate that committing of the first transaction is invalid.

According to a fourth aspect, a client is provided, where the client includes a processor and a memory. The memory is configured to store an instruction. The processor is configured to execute the instruction stored in the memory, where execution of the instruction stored in the memory enables the processor to perform the method according to any one of the second aspect, or the possible implementations of the second aspect.

In the foregoing implementations, the target data may be one row of data (one row of data in a database is also referred to as one record). In this case, the version of the target data is a version of this row of data. Alternatively, the target data may be multiple rows of data. In this case, the version of the target data is a version of these multiple rows of data. Alternatively, the target data may be directly one database table. In this case, the version of the target data is a version of this database table.

In some implementations, that the data operation of the first transaction is an insertion operation means that the first transaction inserts data (or may be described as inserting a record) into a database, and the inserted data does not originally exist in the database. That the data operation of the first transaction is a deletion operation means that the first transaction deletes data (or a record) originally existing in a database. That the data operation of the first transaction is an update operation means that the first transaction needs to modify a value of data originally existing in a database.

Based on the foregoing technical solution, the present application provides a lock-free transaction mechanism capable of supporting multiple concurrent read operations and/or write operations, so as to effectively reduce database storage management complexity.

### BRIEF DESCRIPTION OF DRAWINGS

FIG. 1 shows a schematic diagram of a system architecture according to an embodiment of the present invention;
FIG. 2 shows a schematic flowchart of a database transaction processing method according to an embodiment of the present invention;
FIG. 3 shows a schematic block diagram of a server according to an embodiment of the present invention;
FIG. 4 shows a schematic block diagram of a client according to an embodiment of the present invention;
FIG. 5 shows another schematic block diagram of a server according to an embodiment of the present invention; and
FIG. 6 shows another schematic block diagram of a server according to an embodiment of the present invention.

### DESCRIPTION OF EMBODIMENTS

The following describes technical solutions of the present application with reference to the accompanying drawings.

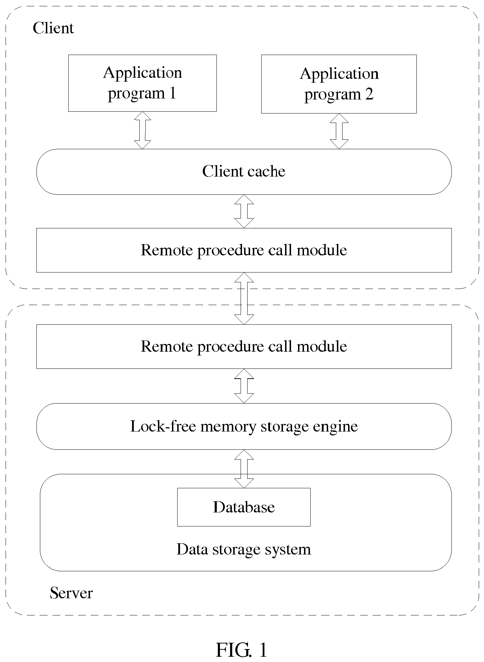

FIG. 1 shows a schematic diagram of a system architecture 100 according to an embodiment of the present invention. The system includes a client (Client) and a server. The server includes a data storage system, a lock-free memory storage engine (Lock-Free Memory Storage Engine) and a remote procedure call (Remote Procedure Call, RPC) module. A database is stored in the data storage system. The lock-free memory storage engine is configured to support real-time efficient access to the database by the client. The RPC module is used for communication between the client and the server. For example, the server receives, by using the RPC module, a database access request sent by the client, provides corresponding data for the client by using the lock-free memory storage engine, and then sends the data to the client by using the RPC module. The client includes application program modules (application programs 1 and 2 shown in FIG. 1, a client cache (Client Cache), and an RPC module. The client cache is located in a memory of the client, and stores data by using a data structure similar to that of an array. The RPC module in the client is also used for communication between the client and the server. The client cache is configured to store data delivered by the server. For example, the client obtains a transaction request by using the application program modules, sends the database access request to the server by using the RPC module, and then receives, by using the RPC module, the data sent by the server, caches the received data to the client cache, and then executes a transaction in the client cache, so as to implement transaction isolation. It should be understood that the client may further include a general memory database core application programming interface (General Memory DataBase Core Application Programming Interface, GMDB Core API). Specifically, the GMDB Core API includes a query application programming interface (Query Application Programming Interface, Query API) and a key value application programming interface (Key Value Application Programming Interface, KV API), where the query API is configured to support conditional query, and the KV API is configured for query based on a primary key value.

In this embodiment of the present invention, in the server, for one piece of data, only a last committed updated version of the data is stored, and accordingly, also only a time stamp of the last committed updated version of the data is stored. The last committed updated version of the data is a version that is after a modification operation of a to-be-committed transaction is last performed on the data, that is, the last committed updated version of the data makes true consistency between the transaction and a database.

A version of the data referred to in this embodiment of the present invention is a version that makes true the consistency between a transaction and a database.

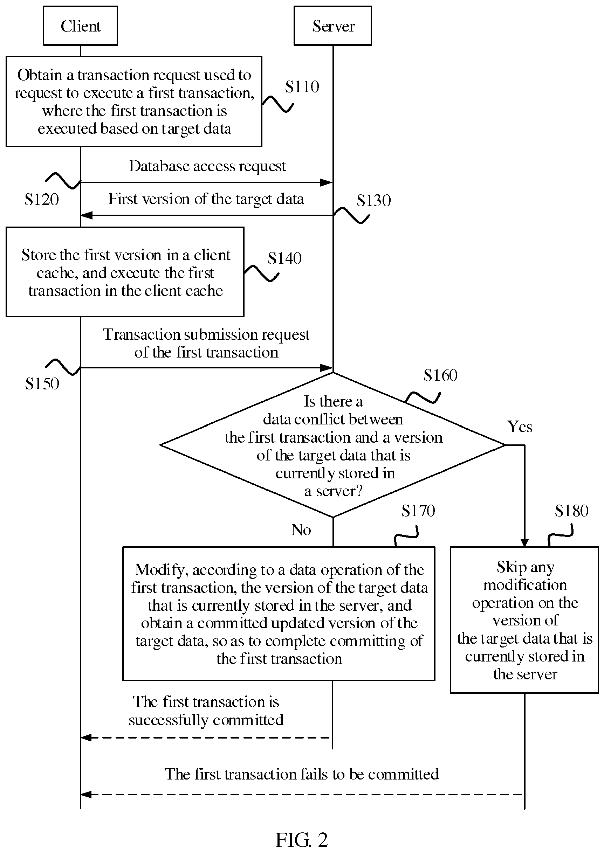

FIG. 2 shows a flowchart of a database transaction processing method 100 according to an embodiment of the present invention. The method 100 includes the following steps.

S110. A client obtains a transaction request used to request to execute a first transaction, where the first transaction needs to be executed based on target data.

Specifically, the client is, for example, the client shown in FIG. 1. For example, the client obtains a transaction request of a user by using an application program.

S120. The client sends, to a server, a database access request used to request the target data.

Specifically, the server is, for example, the server shown in FIG. 1.

It should be understood that a database is stored in the data storage system (as shown in FIG. 1) of the server, and the client needs to send the database access request to the server when the client needs to access data in the database.

It should be further understood that the client further allocates cache space to the first transaction.

S130. The server receives the database access request sent by the client, and sends a first version of the target data to the client based on the database access request, where the first version is a version of the target data that is currently stored in the server, and the version of the target data that is currently stored in the server is a last committed updated version of the target data.

In this embodiment of the present invention, the server stores only the last committed updated version of the target data, and does not store a historical version of the target data. Compared with the existing MVCC technology, the present application can simplify database storage complexity, and can ease a server storage burden.

S140. The client receives the first version of the target data that is sent by the server, stores the first version in a cache of the client, and executes the first transaction in the client cache based on the first version.

In this embodiment of the present invention, a transaction is executed in the client instead of the server, so that the server does not need to maintain multiple versions of the target data.

S150. After executing the first transaction, the client sends a transaction committing request to the server, where the transaction committing request is used to request to commit the first transaction, and the transaction committing request includes a log used to record a data operation of the first transaction.

It should be understood that the log is used to record the data operation of the first transaction. Specifically, for example, the data operation of the first transaction is an insertion operation, a deletion operation, or an update operation. The insertion operation means that the first transaction inserts one row of data (or may be described as inserting one record) into the target data, and the inserted row of data does not originally exist in the target data. The deletion operation means that the first transaction deletes one or more rows of data in the target data, or may be described as deleting one or more records in the target data. The update operation means that the first transaction modifies values of some pieces of data in the target data.

The target data referred to in this embodiment of the present invention is a data resource on which the first transaction depends, that is, the first transaction needs to perform a series of data operations on the target data. Specifically, the target data may be one or more records in the database. It should be understood that, in the database, one row of data is referred to as one record, and expresses an information combination that has a specific meaning. Each record usually includes one primary key (Primary Key), which is used to uniquely indicate the record.

S160. The server receives the transaction committing request sent by the client after the client executes the first transaction based on the first version, and determines, according to the record in the log, whether there is a data conflict between the data operation of the first transaction and the version of the target data that is currently stored in the server; and if so, goes to S180, or else, goes to S170.

Specifically, if database consistency is damaged when the version of the target data that is currently stored in the server is modified according to the first transaction, it is considered that there is a data conflict between the data operation of the first transaction and the version of the target data that is currently stored in the server; or else, there is no conflict.

S170. The server modifies, according to the data operation of the first transaction when it is determined that there is no data conflict between the data operation of the first transaction and the version of the target data that is currently stored in the server, the version of the target data that is currently stored in the server, and obtains a committed updated version of the target data, so as to complete committing of the first transaction.

After the server obtains the committed updated version of the target data, the server sets a new time stamp for the committed updated version of the target data.

Specifically, in S170, the server may send, to the client, a response used to indicate that the first transaction is successfully committed. Accordingly, the client may also present, to a user, a response used to indicate that the first transaction is successfully committed.

S180. The server does not perform, when it is determined that there is a data conflict between the data operation of the first transaction and the version of the target data that is currently stored in the server, any modification operation on the version of the target data that is currently stored in the server.

Specifically, in S180, the server sends, to the client, a response used to indicate that committing of the first transaction is invalid.

In this embodiment of the present invention, after receiving the database access request that requests the target data and that is sent by the client, the server sends the first version of the target data to the client, where the first version is the version of the target data that is currently stored in the server, and the version is the last committed updated version of the target data, so that a transaction can be executed in a client cache based on the first version; and when receiving the transaction committing request sent by the client, the server modifies, according to a data operation of a to-be-committed transaction when it is determined that there is no data conflict between the data operation of the to-be-committed transaction and the version of the target data that is currently stored in the server, the version of the target data that is currently stored in the server, and obtains the committed updated version of the target data, so as to complete committing of the transaction. It should be understood that sending the first version of the target data to the client so that the transaction is executed in the client ensures isolation between concurrent transactions, that is, there is no impact between concurrent read operations, no impact between concurrent read and write operations, and no impact between concurrent write operations. Committing of the transaction is executed, only when the server commits the transaction and it is determined that there is no data conflict between the data operation of the to-be-committed transaction and the version of the target data that is currently stored in the server. This ensures transaction-database consistency. In addition, the transaction is executed in the client based on the first version of the target data, so that the server does not need to maintain multiple versions of the target data, but only needs to maintain the last committed updated version of the target data. Compared with the existing MVCC technology, the present application can effectively reduce database storage management complexity, and ease a server storage burden. Therefore, the present application provides a lock-free transaction mechanism capable of supporting multiple concurrent read operations and/or write operations, so as to effectively reduce database storage management complexity.

The data operation of the first transaction executed in the client cache may be an insertion operation, a deletion operation, or an update operation. For different data operations of the first transaction, methods for the server to determine whether there is a data conflict between the data operation of the first transaction and the version of the target data that is currently stored in the server are also different.

Optionally, in an embodiment, in S140, the client stores, in the client cache, the first version delivered by the server, and performs the data operation of the first transaction in the client cache based on the first version, where the data operation of the first transaction is an insertion operation. In S150, the transaction committing request sent by the client to the server includes the log of the first transaction, the log is used to record the data operation of the first transaction, that is, an insertion operation, and the log includes a primary key (Primary Key) of the insertion operation. In S160, the determining, by the server according to the log, whether there is a data conflict between the data operation of the first transaction and the version of the target data that is currently stored in the server includes: learning, by the server according to the log, that the data operation of the first transaction is an insertion operation, learning a primary key of the insertion operation from the log, and determining whether the primary key of the insertion operation exists in the version of the target data that is currently stored in the server; and if not, determining that there is no data conflict between the data operation of the first transaction and the version of the target data that is currently stored in the server, or if so, determining that there is a data conflict between the data operation of the first transaction and the version of the target data that is currently stored in the server.

Specifically, that the data operation of the first transaction is an insertion operation means that the first transaction needs to insert one or more records into the target data, and the inserted records do not originally exist in the first version of the target data.

It should be understood that the primary key (Primary Key) is usually one or more fields in a table, and a value of the primary key is used to uniquely identify a record in the table. The primary key is a unique key, and is a part defined in the table. The value of the primary key is not replicable. For example, when adding a new record to the table, a relational database management system Microsoft Office Access automatically checks a value of a primary key of the new record, and does not allow the value of the primary key of the new record to replicate a value of a primary key of another record in the table. The primary key cannot be null (NULL). The primary key can be used to accelerate a database operation.

That is, the primary key, of the insertion operation, that is included in the log of the first transaction can uniquely indicate the insertion operation.

It should be understood that when the primary key of the insertion operation does not exist in the version of the target data that is currently stored in the server, it indicates that a record of an operation same as the insertion operation of the first transaction does not exist in the version of the target data that is currently stored in the server. Therefore, there is no data conflict between the data operation of the first transaction and the version of the target data that is currently stored in the server.

It should be further understood that when the primary key of the insertion operation exists in the version of the target data that is currently stored in the server, it indicates that a record of an operation same as the insertion operation of the first transaction already exists in the version of the target data that is currently stored in the server. Therefore, there is a data conflict between the data operation of the first transaction and the version of the target data that is currently stored in the server.

Optionally, in an embodiment, in S140, the client stores, in the client cache, the first version delivered by the server, and performs the data operation of the first transaction in the client cache based on the first version, where the data operation of the first transaction is an update operation or a deletion operation. In S150, the transaction committing request sent by the client to the server includes the log of the first transaction, the log is used to record the data operation of the first transaction, that is, an update operation or a deletion operation, and the transaction committing request further includes a time stamp of the first version. In S160, the determining, by the server according to the record in the log, whether there is a data conflict between the data operation of the first transaction and the version of the target data that is currently stored in the server includes: learning, by the server according to the log, that the data operation of the first transaction is an update operation or a deletion operation, learning, from the transaction committing request, a time stamp of the first version on which the first transaction is based, and determining, by the server, whether a time stamp of the version of the target data that is currently stored in the server is consistent with the time stamp of the first version; and if so, determining that there is no data conflict between the data operation of the first transaction and the version of the target data that is currently stored in the server, or else, determining that there is a data conflict between the data operation of the first transaction and the version of the target data that is currently stored in the server.

Specifically, when the data operation of the first transaction is an update operation, the first transaction needs to modify a value of data (or a record) originally existing in the first version of the target data. When the data operation of the first transaction is a deletion operation, the first transaction needs to delete data (or a record) originally existing in the first version of the target data.

It should be understood that a time stamp of a version is used to indicate a time when the version is updated. If time stamps of versions of the target data are the same, it indicates that these two versions are a same version of the target data, or else, two different versions.

It should be further understood that when the time stamp of the version of the target data that is currently stored in the server is consistent with the time stamp of the first version, it indicates that the target data stored in the server is not modified by another transaction from when the server sends the first version to the client to when the server receives the transaction committing request. Therefore, there is no data conflict between the data operation of the first transaction and the version of the target data that is currently stored in the server.

It should be further understood that when the time stamp of the version of the target data that is currently stored in the server is inconsistent with the time stamp of the first version, it indicates that the target data stored in the server is modified by another transaction from when the server sends the first version to the client to when the server receives the transaction committing request. Therefore, there is a data conflict between the data operation of the first transaction and the version of the target data that is currently stored in the server.

Therefore, in this embodiment of the present invention, after receiving the database access request that requests the target data and that is sent by the client, the server sends the first version of the target data to the client, where the first version is the version of the target data that is currently stored in the server, and the version is the last committed updated version of the target data, so that a transaction can be executed in a client cache based on the first version; and when receiving the transaction committing request sent by the client, the server modifies, according to a data operation of a to-be-committed transaction when it is determined that there is no data conflict between the data operation of the to-be-committed transaction and the version of the target data that is currently stored in the server, the version of the target data that is currently stored in the server, and obtains the committed updated version of the target data, so as to complete committing of the transaction. It should be understood that sending the first version of the target data to the client so that the transaction is executed in the client ensures isolation between concurrent transactions, that is, there is no impact between concurrent read operations, no impact between concurrent read and write operations, and no impact between concurrent write operations. Committing of the transaction is executed, only when the server commits the transaction and it is determined that there is no data conflict between the data operation of the to-be-committed transaction and the version of the target data that is currently stored in the server. This ensures transaction-database consistency. In addition, the transaction is executed in the client based on the first version of the target data, so that the server does not need to maintain multiple versions of the target data, but only needs to maintain the last committed updated version of the target data. Compared with the existing MVCC technology, the present application can effectively reduce database storage management complexity, and ease a server storage burden. Therefore, the present application provides a lock-free transaction mechanism capable of supporting multiple concurrent read operations and/or write operations, so as to effectively reduce database storage management complexity.

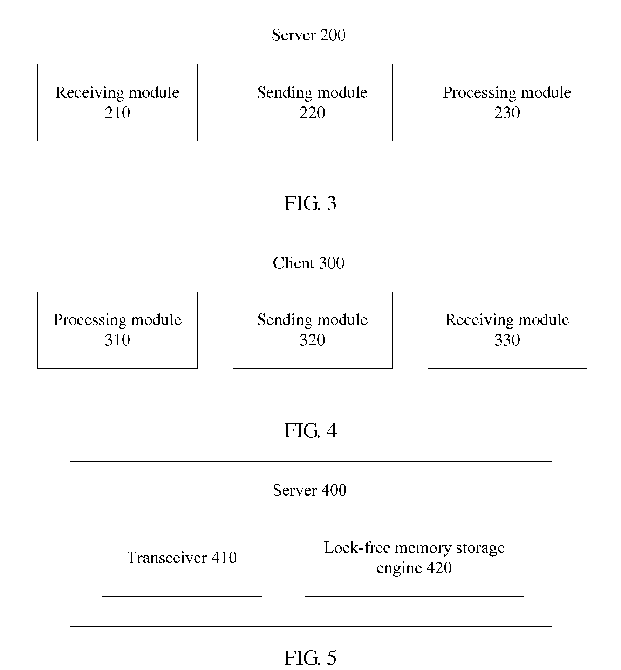

FIG. 3 shows a schematic block diagram of a server 200 according to an embodiment of the present invention. The server 200 includes:
a receiving module 210, configured to receive a database access request sent by a client, where the database access request is used to request target data;
a sending module 220, configured to send a first version of the target data to the client based on the database access request received by the receiving module, where the first version is a version of the target data that is currently stored in the server, and the version of the target data that is currently stored in the server is a last committed updated version of the target data, where
the receiving module 210 is further configured to receive a transaction committing request sent by the client after the client executes a first transaction based on the first version, where the transaction committing request is used to request to commit the first transaction, and the transaction committing request includes a log used to record a data operation of the first transaction; and
a processing module 230, configured to: modify, according to the log received by the receiving module and the data operation of the first transaction when it is determined that there is no data conflict between the data operation of the first transaction and the version of the target data that is currently stored in the server, the version of the target data that is currently stored in the server, and obtain a committed updated version of the target data, so as to complete committing of the first transaction.

Specifically, the receiving module 210 may be implemented by a receiver or a receiver-related component in the server 200. The sending module 220 may be implemented by a transmitter or a transmitter-related component in the server 200. Specifically, the receiving module 210 and the sending module 220 may be two independent devices, or may be implemented by a device that has a receiving/transmitting function, for example, the receiving module 210 and the sending module 220 may be implemented by the remote procedure call module in the server shown in FIG. 1. The processing module 230 may be implemented by a processor or a processor-related component in the server 200.

Therefore, in this embodiment of the present invention, after receiving the database access request that requests the target data and that is sent by the client, the server sends the first version of the target data to the client, where the first version is the version of the target data that is currently stored in the server, and the version is the last committed updated version of the target data, so that a transaction can be executed in a client cache based on the first version; and when receiving the transaction committing request sent by the client, the server modifies, according to a data operation of a to-be-committed transaction when it is determined that there is no data conflict between the data operation of the to-be-committed transaction and the version of the target data that is currently stored in the server, the version of the target data that is currently stored in the server, and obtains the committed updated version of the target data, so as to complete committing of the transaction. It should be understood that sending the first version of the target data to the client so that the transaction is executed in the client ensures isolation between concurrent transactions, that is, there is no impact between concurrent read operations, no impact between concurrent read and write operations, and no impact between concurrent write operations. Committing of the transaction is executed, only when the server commits the transaction and it is determined that there is no data conflict between the data operation of the to-be-committed transaction and the version of the target data that is currently stored in the server. This ensures transaction-database consistency. In addition, the transaction is executed in the client based on the first version of the target data, so that the server does not need to maintain multiple versions of the target data, but only needs to maintain the last committed updated version of the target data. Compared with the existing MVCC technology, the present application can effectively reduce database storage management complexity, and ease a server storage burden. Therefore, the present application provides a lock-free transaction mechanism capable of supporting multiple concurrent read operations and/or write operations, so as to effectively reduce database storage management complexity.

Optionally, in an embodiment, the data operation of the first transaction includes an insertion operation, and the log includes a primary key corresponding to the insertion operation; and the processing module 230 is further configured to: when the primary key does not exist in the version of the target data that is currently stored in the server, determine that there is no data conflict between the data operation of the first transaction and the version of the target data that is currently stored in the server.

Optionally, in an embodiment, the data operation of the first transaction includes an update operation or a deletion operation, and the transaction committing request further includes a time stamp of the first version; and the processing module 230 is further configured to: when a time stamp of the version of the target data that is currently stored in the server is consistent with the time stamp of the first version, determine that there is no data conflict between the data operation of the first transaction and the version of the target data that is currently stored in the server.

Optionally, in an embodiment, the processing module 230 is further configured to: after obtaining the committed updated version of the target data, set a new time stamp for the committed updated version of the target data.

Optionally, in an embodiment, the sending module 220 is further configured to: when it is determined that there is a data conflict between the data operation of the first transaction and the version of the target data that is currently stored in the server, send, to the client, a response used to indicate that committing of the first transaction is invalid.

It should be understood that the server 200 according to this embodiment of the present invention may be corresponding to the server in the database transaction processing method in this embodiment of the present invention. In addition, the foregoing and other operations and/or functions of the modules in the server 200 are separately used to implement a corresponding procedure of the method in FIG. 2. For brevity, details are not described herein again.

FIG. 4 shows a schematic block diagram of a client 300 according to an embodiment of the present invention. The client 300 includes:
a processing module 310, configured to obtain, a transaction request used to request to execute a first transaction, where the first transaction needs to be executed based on target data;
a sending module 320, configured to send, to a server, a database access request used to request the target data; and
a receiving module 330, configured to receive a first version of the target data that is sent by the server, where the first version is a version of the target data that is currently stored in the server, and the version of the target data that is currently stored in the server is a last committed updated version of the target data, where
the processing module 310 is further configured to execute the first transaction based on the first version received by the receiving module; and
the sending module is further configured to: after the processing module executes the first transaction, send a transaction committing request to the server, where the transaction committing request is used to request to commit the first transaction, and the transaction committing request includes a log used to record a data operation of the first transaction, so that the client modifies, according to the log and the data operation of the first transaction when it is determined that there is no data conflict between the data operation of the first transaction and the version of the target data that is currently stored in the server, the version of the target data that is currently stored in the server, and obtains a committed updated version of the target data, so as to complete committing of the first transaction.

Specifically, the processing module 310 may be implemented by a processor or a processor-related component in the client 300. The sending module 320 may be implemented by a transmitter or a transmitter-related component in the client 300. The receiving module 330 may be implemented by a receiver or a receiver-related component in the client 300. Specifically, the receiving module 320 and the sending module 330 may be two independent devices, or may be implemented by a device that has a receiving/transmitting function, for example, the receiving module 320 and the sending module 330 may be implemented by the remote procedure call module in the client shown in FIG. 1.

Therefore, in this embodiment of the present invention, after receiving the database access request that requests the target data and that is sent by the client, the server sends the first version of the target data to the client, where the first version is the version of the target data that is currently stored in the server, and the version is the last committed updated version of the target data, so that a transaction can be executed in a client cache based on the first version; and when receiving the transaction committing request sent by the client, the server modifies, according to a data operation of a to-be-committed transaction when it is determined that there is no data conflict between the data operation of the to-be-committed transaction and the version of the target data that is currently stored in the server, the version of the target data that is currently stored in the server, and obtains the committed updated version of the target data, so as to complete committing of the transaction. It should be understood that sending the first version of the target data to the client so that the transaction is executed in the client ensures isolation between concurrent transactions, that is, there is no impact between concurrent read operations, no impact between concurrent read and write operations, and no impact between concurrent write operations. Committing of the transaction is executed, only when the server commits the transaction and it is determined that there is no data conflict between the data operation of the to-be-committed transaction and the version of the target data that is currently stored in the server. This ensures transaction-database consistency. In addition, the transaction is executed in the client based on the first version of the target data, so that the server does not need to maintain multiple versions of the target data, but only needs to maintain the last committed updated version of the target data. Compared with the existing MVCC technology, the present application can effectively reduce database storage management complexity, and ease a server storage burden. Therefore, the present application provides a lock-free transaction mechanism capable of supporting multiple concurrent read operations and/or write operations, so as to effectively reduce database storage management complexity.

Optionally, in an embodiment, the data operation of the first transaction includes an insertion operation, and the log includes a primary key corresponding to the insertion operation.

Optionally, in an embodiment, the data operation of the first transaction includes an update operation or a deletion operation, and the transaction committing request further includes a time stamp of the first version.

It should be understood that the client 300 according to this embodiment of the present invention may be corresponding to the client in the database transaction processing method in this embodiment of the present invention. In addition, the foregoing and other operations and/or functions of the modules in the client 300 are separately used to implement a corresponding procedure of the method in FIG. 2. For brevity, details are not described herein again.

FIG. 5 shows another schematic block diagram of a server 400 according to an embodiment of the present invention. The server 400 includes:
a transceiver 410, configured to receive a database access request sent by a client, where the database access request is used to request target data, where
the transceiver 410 is further configured to send a first version of the target data to the client based on the database access request, where the first version is a version of the target data that is currently stored in the server, and the version of the target data that is currently stored in the server is a last committed updated version of the target data; and
the transceiver 410 is further configured to receive a transaction committing request sent by the client after the client executes a first transaction based on the first version, where the transaction committing request is used to request to commit the first transaction, and the transaction committing request includes a log used to record a data operation of the first transaction; and
a lock-free memory storage engine 420, configured to: modify, according to the log and the data operation of the first transaction when it is determined that there is no data conflict between the data operation of the first transaction and the version of the target data that is currently stored in the server, the version of the target data that is currently stored in the server, and obtain a committed updated version of the target data, so as to complete committing of the first transaction.

Specifically, for example, the transceiver 410 is the remote procedure call module in the server shown in FIG. 1. For example, the lock-free memory storage engine 420 is the lock-free memory storage engine in the server shown in FIG. 1.

In this embodiment of the present invention, the lock-free memory storage engine 420 is a lock-free memory (Memory) storage engine, so that a transaction can update a database without a transaction lock, so as to support real-time and highly efficient access to data by the client.

Specifically, for example, the lock-free memory storage engine 420 is a database management system (database management system, DBMS) stored in the server 400, and is configured to scientifically organize and store data (that is, data in a database).

Therefore, in this embodiment of the present invention, after receiving the database access request that requests the target data and that is sent by the client, the server sends the first version of the target data to the client, where the first version is the version of the target data that is currently stored in the server, and the version is the last committed updated version of the target data, so that a transaction can be executed in a client cache based on the first version; and when receiving the transaction committing request sent by the client, the server modifies, according to a data operation of a to-be-committed transaction when it is determined that there is no data conflict between the data operation of the to-be-committed transaction and the version of the target data that is currently stored in the server, the version of the target data that is currently stored in the server, and obtains the committed updated version of the target data, so as to complete committing of the transaction. It should be understood that sending the first version of the target data to the client so that the transaction is executed in the client ensures isolation between concurrent transactions, that is, there is no impact between concurrent read operations, no impact between concurrent read and write operations, and no impact between concurrent write operations. Committing of the transaction is executed, only when the server commits the transaction and it is determined that there is no data conflict between the data operation of the to-be-committed transaction and the version of the target data that is currently stored in the server. This ensures transaction-database consistency. In addition, the transaction is executed in the client based on the first version of the target data, so that the server does not need to maintain multiple versions of the target data, but only needs to maintain the last committed updated version of the target data. Compared with the existing MVCC technology, the present application can effectively reduce database storage management complexity, and ease a server storage burden. Therefore, the present application provides a lock-free transaction mechanism capable of supporting multiple concurrent read operations and/or write operations, so as to effectively reduce database storage management complexity.

Optionally, in this embodiment of the present invention, the lock-free memory storage engine 420 is stored in a computer readable storage medium in the server 400, where an instruction is stored in the computer readable storage medium. A processor 430 in the server 400 is configured to execute the instruction stored in the computer readable storage medium. In addition, execution of the instruction stored in the computer readable storage medium enables the processor 430 to control the transceiver 410 to receive a signal or send a signal, and enables the processor 430 to process the signal received by the transceiver 410, that is, execution, by a processor 430, of the instruction stored in the computer readable storage medium enables the transceiver 410 to be configured to: receive a database access request sent by a client, where the database access request is used to request target data; send a first version of the target data to the client based on the database access request, where the first version is a version of the target data that is currently stored in the server, and the version of the target data that is currently stored in the server is a last committed updated version of the target data; and receive a transaction committing request sent by the client after the client executes a first transaction based on the first version, where the transaction committing request is used to request to commit the first transaction, and the transaction committing request includes a log used to record a data operation of the first transaction; and the processor 410 to be configured to: modify, according to the log and the data operation of the first transaction when it is determined that there is no data conflict between the data operation of the first transaction and the version of the target data that is currently stored in the server, the version of the target data that is currently stored in the server, and obtain a committed updated version of the target data, so as to complete committing of the first transaction.

Optionally, in an embodiment, the data operation of the first transaction includes an insertion operation, and the log includes a primary key corresponding to the insertion operation; and the lock-free memory storage engine 420 is further configured to: when the primary key does not exist in the version of the target data that is currently stored in the server, determine that there is no data conflict between the data operation of the first transaction and the version of the target data that is currently stored in the server.

Optionally, in an embodiment, the data operation of the first transaction includes an update operation or a deletion operation, and the transaction committing request further includes a time stamp of the first version; and the lock-free memory storage engine 420 is further configured to: when a time stamp of the version of the target data that is currently stored in the server is consistent with the time stamp of the first version, determine that there is no data conflict between the data operation of the first transaction and the version of the target data that is currently stored in the server.

Optionally, in an embodiment, the lock-free memory storage engine 420 is further configured to: after obtaining the committed updated version of the target data, set a new time stamp for the committed updated version of the target data.

Optionally, in an embodiment, the lock-free memory storage engine 420 is further configured to: when it is determined that there is a data conflict between the data operation of the first transaction and the version of the target data that is currently stored in the server, control the transceiver 410 to send, to the client, a response used to indicate that committing of the first transaction is invalid.

It should be understood that, in this embodiment of the present invention, the processor 430 may be a central processing unit (Central Processing Unit, "CPU" for short), or the processor 430 may be another general purpose processor, a digital signal processor (DSP), an application-specific integrated circuit (ASIC), a field programmable gate array (FPGA) or other programmable logic device, a discrete gate or transistor logic device, a discrete hardware component, or the like. The general purpose processor may be a microprocessor, or the processor may be any normal processor, or the like.

In an implementation process, steps in the foregoing methods can be completed by using a hardware integrated logical circuit in the processor 430, or by using instructions in a form of software. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in a memory, and the processor 430 reads information in the memory and completes the steps in the foregoing methods in combination with hardware of the processor. To avoid repetition, details are not described herein again.

It should be understood that the server 400 according to this embodiment of the present invention may be corresponding to the server in the database transaction processing method in this embodiment of the present invention, and may be corresponding to the server 200 according to this embodiment of the present invention. In addition, the foregoing and other operations and/or functions of the modules in the server 400 are separately used to implement a corresponding procedure of the method in FIG. 2. For brevity, details are not described herein again.

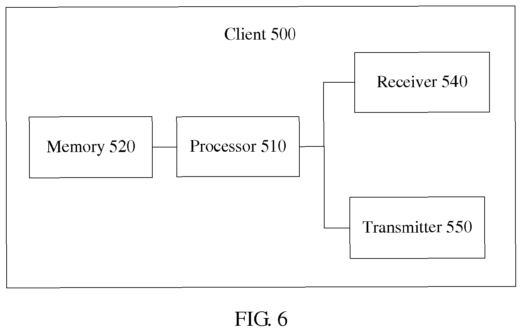

FIG. 6 shows another schematic block diagram of a client 500 according to an embodiment of the present invention. The client 500 includes a processor 510, a memory 520, a bus system 530, a receiver 540, and a transmitter 550. The processor 510, the memory 520, the receiver 540, and the transmitter 550 are connected to each other by using the bus system 530. The memory 520 is configured to store an instruction. The processor 510 is configured to execute the instruction stored in the memory 520, so as to control the receiver 540 to receive a signal and control the transmitter 550 to send a signal. The processor 510 is configured to obtain a transaction request used to request to execute a first transaction, where the first transaction needs to be executed based on target data. The transmitter 550 is configured to send, to a server, a database access request used to request the target data. The receiver module 540 is configured to receive a first version of the target data that is sent by the server, where the first version is a version of the target data that is currently stored in the server, and the version of the target data that is currently stored in the server is a last committed updated version of the target data. The processor 510 is further configured to: store the first version in a cache of the client 500, and execute the first transaction based on the first version. The transmitter 550 is further configured to: after the first transaction is executed, send a transaction committing request to the server, where the transaction committing request is used to request to commit the first transaction, and the transaction committing request includes a log used to record a data operation of the first transaction, so that the client modifies, according to the log and the data operation of the first transaction when it is determined that there is no data conflict between the data operation of the first transaction and the version of the target data that is currently stored in the server, the version of the target data that is currently stored in the server, and obtains a committed updated version of the target data, so as to complete committing of the first transaction.

Therefore, in this embodiment of the present invention, after receiving the database access request that requests the target data and that is sent by the client, the server sends the first version of the target data to the client, where the first version is the version of the target data that is currently stored in the server, and the version is the last committed updated version of the target data, so that a transaction can be executed in a client cache based on the first version; and when receiving the transaction committing request sent by the client, the server modifies, according to a data operation of a to-be-committed transaction when it is determined that there is no data conflict between the data operation of the to-be-committed transaction and the version of the target data that is currently stored in the server, the version of the target data that is currently stored in the server, and obtains the committed updated version of the target data, so as to complete committing of the transaction. It should be understood that sending the first version of the target data to the client so that the transaction is executed in the client ensures isolation between concurrent transactions, that is, there is no impact between concurrent read operations, no impact between concurrent read and write operations, and no impact between concurrent write operations. Committing of the transaction is executed, only when the server commits the transaction and it is determined that there is no data conflict between the data operation of the to-be-committed transaction and the version of the target data that is currently stored in the server. This ensures transaction-database consistency. In addition, the transaction is executed in the client based on the first version of the target data, so that the server does not need to maintain multiple versions of the target data, but only needs to maintain the last committed updated version of the target data. Compared with the existing MVCC technology, the present application can effectively reduce database storage management complexity, and ease a server storage burden. Therefore, the present application provides a lock-free transaction mechanism capable of supporting multiple concurrent read operations and/or write operations, so as to effectively reduce database storage management complexity.

Optionally, in an embodiment, the data operation of the first transaction includes an insertion operation, and the log includes a primary key corresponding to the insertion operation.

Optionally, in an embodiment, the data operation of the first transaction includes an update operation or a deletion operation, and the transaction committing request further includes a time stamp of the first version.

It should be understood that in the embodiment of the present invention, the processor 510 may be a central processing unit (Central Processing Unit, "CPU" for short), or the processor 510 may be another general purpose processor, a digital signal processor (DSP), an application-specific integrated circuit (ASIC), a field programmable gate array (FPGA) or other programmable logic device, a discrete gate or transistor logic device, a discrete hardware component, or the like. The general purpose processor may be a microprocessor, or the processor may be any normal processor, or the like.

The memory 520 may include a read-only memory and a random access memory, and provide an instruction and data to the processor 510. A part of the memory 520 may further include a non-volatile random access memory. For example, the memory 520 may further store information of a device type.

The bus system 530 may further include a power bus, a control bus, a status signal bus, and the like, in addition to a data bus. However, for clear description, various types of buses in the figure are marked as the bus system 530.

In an implementation process, steps in the foregoing methods can be implemented by using a hardware integrated logical circuit in the processor 510, or by using instructions in a form of software. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 520, and the processor 510 reads information in the memory 520 and completes the steps in the foregoing methods in combination with hardware of the processor. To avoid repetition, details are not described herein again.

It should be understood that the transmitter 550 may be a hardware circuit or a device configured to implement a sending function, such as an antenna or a network interface card. Likewise, the receiver 540 may also be a hardware circuit or a device configured to implement a sending function, such as an antenna or a network interface card. This is not limited in this embodiment of the present invention.

It should be further understood that the receiver 540 and the transmitter 550 may be implemented by an apparatus that has receiving and sending functions, such as a transceiver, and specifically, such as an antenna.

It should be understood that the client 500 according to this embodiment of the present invention may be corresponding to the client in the database transaction processing method in this embodiment of the present invention, and may be corresponding to the client 300 according to this embodiment of the present invention. In addition, the foregoing and other operations and/or functions of the modules in the client 500 are separately used to implement a corresponding procedure of the method in FIG. 2. For brevity, details are not described herein again.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present application. The execution sequences of the processes should be determined according to functions and internal logic of the processes, and should not be construed as any limitation on the implementation processes of the embodiments of the present invention.

A person of ordinary skill in the art may be aware that the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present claims.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections via some interfaces, apparatuses or units, and may be implemented in electronic, mechanical, or other forms.

The units described as separate parts may or may not be physically separate. Parts displayed as units may or may not be physical units, and may be located in one position, or may be distributed on a plurality of network units.

In addition, function units in the embodiments of the present application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of the present application essentially, or the part contributing to the prior art, or some of the technical solutions may be implemented in a form of a software product. The software product is stored in a storage medium and includes several instructions for instructing a computer device (which may be a personal computer, a server, or a network device) to perform all or some of the steps of the methods described in the embodiments of the present application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A database transaction processing method, comprising:
receiving (S 120), by a server, a database access request sent by a client, wherein the database access request requesting target data;
sending (S 130), by the server, a first version of the target data to the client based on the database access request, wherein the first version is a version of the target data that is currently stored in the server, and the server stores only a last committed updated version of the target data;
receiving (S 150), by the server, a transaction committing request sent by the client after the client executes a first transaction based on the first version of the target data, wherein the transaction committing request requesting to commit the first transaction, and the transaction committing request comprises a log recording a data operation of the first transaction; and
modifying (S170), by the server, the version of the target data that is currently stored in the server, to obtain a committed updated version of the target data when there is no data conflict between the data operation of the first transaction and the version of the target data that is currently stored in the server;
wherein a data conflict between the data operation of the first transaction and the version of the target data that is currently stored in the server is determined if database consistency is damaged when the version of the target data that is currently stored in the server is modified according to the first transaction.

2. The method according to claim 1, wherein the data operation of the first transaction comprises an insertion operation, and the log comprises a primary key corresponding to the insertion operation; and the method further comprises:
when the primary key does not exist in the version of the target data that is currently stored in the server, determining, by the server, that there is no data conflict between the data operation of the first transaction and the version of the target data that is currently stored in the server.

3. The method according to claim 1, wherein the data operation of the first transaction comprises an update operation or a deletion operation, and the transaction committing request further comprises a time stamp of the first version; and the method further comprises:
when a time stamp of the version of the target data that is currently stored in the server is consistent with the time stamp of the first version, determining, by the server, that there is no data conflict between the data operation of the first transaction and the version of the target data that is currently stored in the server.

4. The method according to any one of claims 1 to 3, wherein after the obtaining, by the server, a committed updated version of the target data, the method further comprises: setting, by the server, a new time stamp for the committed updated version of the target data.

5. The method according to any one of claims 1 to 4, wherein the method further comprises: when it is determined that there is a data conflict between the data operation of the first transaction and the version of the target data that is currently stored in the server, sending, by the server to the client, a response indicating that committing of the first transaction is invalid.

6. A database transaction processing method, comprising:
obtaining (S 110), by a client, a transaction request requesting to execute a first transaction, wherein the first transaction needs to be executed based on target data;
sending (S120), by the client to a server, a database access request requesting the target data;
receiving (S 130), by the client, a first version of the target data that is sent by the server, wherein the first version is a version of the target data that is currently stored in the server, and the version of the target data that is currently stored in the server is a last committed updated version of the target data;
executing (S 140), by the client, the first transaction based on the first version of the target data; and
sending (S150), by the client after executing the first transaction, a transaction committing request to the server, wherein the transaction committing request requesting to commit the first transaction, and the transaction committing request comprises a log recording a data operation of the first transaction, so that the server modifies the version of the target data that is currently stored in the server to obtain a committed updated version of the target data when there is no data conflict between the data operation of the first transaction and the version of the target data that is currently stored in the server;
wherein a data conflict between the data operation of the first transaction and the version of the target data that is currently stored in the server is determined if database consistency is damaged when the version of the target data that is currently stored in the server is modified according to the first transaction.

7. The method according to claim 6, wherein the data operation of the first transaction comprises an insertion operation, and the log comprises a primary key corresponding to the insertion operation.

8. The method according to claim 6, wherein the data operation of the first transaction comprises an update operation or a deletion operation, and the transaction committing request further comprises a time stamp of the first version.

9. A server (S200), comprising:
a receiving module (S210), configured to receive a database access request sent by a client, wherein the database access request requesting target data;
a sending module (S220), configured to send a first version of the target data to the client based on the database access request received by the receiving module, wherein the first version is a version of the target data that is currently stored in the server, and the server stores only a last committed updated version of the target data, wherein
the receiving module (S210) is further configured to receive a transaction committing request sent by the client after the client executes a first transaction based on the first version of the target data, wherein the transaction committing request requesting to commit the first transaction, and the transaction committing request comprises a log recording a data operation of the first transaction; and
a processing module (S230), configured to: modify the version of the target data that is currently stored in the server to obtain a committed updated version of the target data when there is no data conflict between the data operation of the first transaction and the version of the target data that is currently stored in the server;
wherein a data conflict between the data operation of the first transaction and the version of the target data that is currently stored in the server is determined if database consistency is damaged when the version of the target data that is currently stored in the server is modified according to the first transaction.

10. The server according to claim 9, wherein the data operation of the first transaction comprises an insertion operation, and the log comprises a primary key corresponding to the insertion operation; and the processing module (S230) is further configured to: when the primary key does not exist in the version of the target data that is currently stored in the server, determine that there is no data conflict between the data operation of the first transaction and the version of the target data that is currently stored in the server.

11. The server according to claim 9, wherein the data operation of the first transaction comprises an update operation or a deletion operation, and the transaction committing request further comprises a time stamp of the first version; and the processing module (S230) is further configured to: when a time stamp of the version of the target data that is currently stored in the server is consistent with the time stamp of the first version, determine that there is no data conflict between the data operation of the first transaction and the version of the target data that is currently stored in the server.

12. The server according to any one of claims 9 to 11, wherein the processing module (S230) is further configured to: set a new time stamp for the committed updated version of the target data after obtaining the committed updated version of the target data.

13. The server according to any one of claims 9 to 12, wherein the sending module (S220) is further configured to: when it is determined that there is a data conflict between the data operation of the first transaction and the version of the target data that is currently stored in the server, send, to the client, a response indicating that committing of the first transaction is invalid.

14. A client (300), comprising:
a processing module (310), configured to obtain, a transaction request requesting to execute a first transaction, wherein the first transaction needs to be executed based on target data;
a sending module (320), configured to send, to a server, a database access request requesting the target data; and
a receiving module (330), configured to receive a first version of the target data that is sent by the server, wherein the first version is a version of the target data that is currently stored in the server, and the version of the target data that is currently stored in the server is a last committed updated version of the target data, wherein
the processing module (310) is further configured to execute the first transaction based on the first version of the target data received by the receiving module (330); and
the sending module (320) is further configured to: send a transaction committing request to the server after the processing module (310) executes the first transaction, wherein the transaction committing request requesting to commit the first transaction, and the transaction committing request comprises a log recording a data operation of the first transaction, so that the server modifies the version of the target data that is currently stored in the server to obtain a committed updated version of the target data when there is no data conflict between the data operation of the first transaction and the version of the target data that is currently stored in the server;
wherein a data conflict between the data operation of the first transaction and the version of the target data that is currently stored in the server is determined if database consistency is damaged when the version of the target data that is currently stored in the server is modified according to the first transaction.

15. The client (300) according to claim 14, wherein the data operation of the first transaction comprises an insertion operation, and the log comprises a primary key corresponding to the insertion operation.

## Patentansprüche

1. Verfahren zur Verarbeitung einer Datenbanktransaktion, umfassend:
Empfangen (S120) einer von einem Client gesendeten Datenbankzugriffsanforderung durch einen Server, wobei die Datenbankzugriffsanforderung Zieldaten anfordert;
Senden (S130) einer ersten Version der Zieldaten durch den Server zu dem Client, basierend auf der Datenbankzugriffsanforderung, wobei die erste Version eine Version der Zieldaten ist, die aktuell in dem Server gespeichert ist, und der Server nur eine zuletzt übergebene aktualisierte Version der Zieldaten speichert;
Empfangen (S150) einer von dem Client gesendeten Transaktionsübergabeanforderung durch den Server, nachdem der Client eine erste Transaktion basierend auf der ersten Version der Zieldaten durchgeführt hat, wobei die Transaktionsübergabeanforderung die Übergabe der ersten Transaktion anfordert und die Transaktionsübergabeanforderung eine Protokollaufzeichnung einer Datenoperation der ersten Transaktion umfasst; und
Modifizieren (S170) der Version der Zieldaten, die aktuell in dem Server gespeichert ist, durch den Server, um eine übergebene aktualisierte Version der Zieldaten zu erhalten, wenn zwischen der Datenoperation der ersten Transaktion und der Version der Zieldaten, die aktuell in dem Server gespeichert ist, kein Datenkonflikt vorliegt;
wobei zwischen der Datenoperation der ersten Transaktion und der Version der Zieldaten, die aktuell in dem Server gespeichert ist, ein Datenkonflikt festgestellt wird, falls die Datenbankkonsistenz beschädigt wird, wenn die Version der Zieldaten, die aktuell in dem Server gespeichert ist, entsprechend der ersten Transaktion modifiziert wird.

2. Verfahren nach Anspruch 1, wobei die Datenoperation der ersten Transaktion eine Einfügungsoperation umfasst und das Protokoll einen der Einfügungsoperation entsprechenden primären Schlüssel umfasst; und das Verfahren ferner Folgendes umfasst:
Wenn der primäre Schlüssel in der Version der Zieldaten, die aktuell in dem Server gespeichert ist, nicht vorliegt: Feststellen durch den Server, dass zwischen der Datenoperation der ersten Transaktion und der Version der Zieldaten, die aktuell in dem Server gespeichert ist, kein Datenkonflikt vorliegt.

3. Verfahren nach Anspruch 1, wobei die Datenoperation der ersten Transaktion eine Aktualisierungsoperation oder eine Löschoperation umfasst und die Transaktionsübergabeanforderung ferner einen Zeitstempel der ersten Version umfasst und das Verfahren ferner Folgendes umfasst:
Wenn ein Zeitstempel der Version der Zieldaten, die aktuell in dem Server gespeichert ist, mit dem Zeitstempel der ersten Version konsistent ist: Feststellen durch den Server, dass zwischen der Datenoperation der ersten Transaktion und der Version der Zieldaten, die aktuell in dem Server gespeichert ist, kein Datenkonflikt vorliegt.

4. Verfahren nach einem der Ansprüche 1 bis 3, wobei das Verfahren nach dem Erhalten einer übergebenen aktualisierten Version der Zieldaten durch den Server ferner Folgendes umfasst: Einstellen eines neuen Zeitstempels für die übergebene aktualisierte Version der Zieldaten durch den Server.

5. Verfahren nach einem der Ansprüche 1 bis 4, wobei das Verfahren ferner Folgendes umfasst: Wenn festgestellt wird, dass zwischen der Datenoperation der ersten Transaktion und der Version der Zieldaten, die aktuell in dem Server gespeichert ist, ein Datenkonflikt vorliegt: Senden einer Antwort von dem Server zu dem Client mit der Angabe, dass die Übergabe der ersten Transaktion ungültig ist.

6. Verfahren zur Verarbeitung einer Datenbanktransaktion, umfassend:
Erhalten (S110) einer Transaktionsanforderung durch einen Client, die das Ausführen einer ersten Transaktion anfordert, wobei die erste Transaktion basierend auf Zieldaten ausgeführt werden soll;
Senden (S120) einer Datenbankzugriffsanforderung durch den Client zu einem Server, die die Zieldaten anfordert;
Empfangen (S130) einer ersten Version der Zieldaten durch den Client, die von dem Server gesendet wird, wobei die erste Version eine Version der Zieldaten ist, die aktuell in dem Server gespeichert ist, und die Version der Zieldaten, die aktuell in dem Server gespeichert ist, eine zuletzt übergebene aktualisierte Version der Zieldaten ist; Ausführen (S140) der ersten Transaktion durch den Client basierend auf der ersten Version der Zieldaten; und
Senden (S150) einer Transaktionsübergabeanforderung durch den Client zu dem Server nach Ausführung der ersten Transaktion, wobei die Transaktionsübergabeanforderung die Übergabe der ersten Transaktion anfordert und die Transaktionsübergabeanforderung eine Protokollaufzeichnung einer Datenoperation der ersten Transaktion umfasst, sodass der Server die Version der Zieldaten, die aktuell in dem Server gespeichert ist, modifiziert, um eine übergebene aktualisierte Version der Zieldaten zu erhalten, wenn zwischen der Datenoperation der ersten Transaktion und der Version der Zieldaten, die aktuell in dem Server gespeichert ist, kein Datenkonflikt vorliegt;
wobei zwischen der Datenoperation der ersten Transaktion und der Version der Zieldaten, die aktuell in dem Server gespeichert ist, ein Datenkonflikt festgestellt wird, falls die Datenbankkonsistenz beschädigt wird, wenn die Version der Zieldaten, die aktuell in dem Server gespeichert ist, entsprechend der ersten Transaktion modifiziert wird.

7. Verfahren nach Anspruch 6, wobei die Datenoperation der ersten Transaktion eine Einfügungsoperation umfasst und das Protokoll einen der Einfügungsoperation entsprechenden primären Schlüssel umfasst.

8. Verfahren nach Anspruch 6, wobei die Datenoperation der ersten Transaktion eine Aktualisierungsoperation oder eine Löschoperation umfasst und die Transaktionsübergabeanforderung ferner einen Zeitstempel der ersten Version umfasst.

9. Server (S200), umfassend:
ein Empfangsmodul (S210), ausgelegt zum Empfangen einer von einem Client gesendeten Datenbankzugriffsanforderung, wobei die Datenbankzugriffsanforderung Zieldaten anfordert;
ein Sendemodul (S220), ausgelegt zum Senden einer ersten Version der Zieldaten zu dem Client, basierend auf der von dem Empfangsmodul empfangenen Datenbankzugriffsanforderung, wobei die erste Version eine Version der Zieldaten ist, die aktuell in dem Server gespeichert ist, und der Server nur eine zuletzt übergebene aktualisierte Version der Zieldaten speichert; wobei
das Empfangsmodul (S210) ferner ausgelegt ist zum Empfangen einer von dem Client gesendeten Transaktionsübergabeanforderung, nachdem der Client eine erste Transaktion basierend auf der ersten Version der Zieldaten durchgeführt hat, wobei die Transaktionsübergabeanforderung die Übergabe der ersten Transaktion anfordert und die Transaktionsübergabeanforderung eine Protokollaufzeichnung einer Datenoperation der ersten Transaktion umfasst; und
ein Verarbeitungsmodul (S230), ausgelegt zum Modifizieren der Version der Zieldaten, die aktuell in dem Server gespeichert ist, um eine übergebene aktualisierte Version der Zieldaten zu erhalten, wenn zwischen der Datenoperation der ersten Transaktion und der Version der Zieldaten, die aktuell in dem Server gespeichert ist, kein Datenkonflikt vorliegt;
wobei zwischen der Datenoperation der ersten Transaktion und der Version der Zieldaten, die aktuell in dem Server gespeichert ist, ein Datenkonflikt festgestellt wird, falls die Datenbankkonsistenz beschädigt wird, wenn die Version der Zieldaten, die aktuell in dem Server gespeichert ist, entsprechend der ersten Transaktion modifiziert wird.

10. Server nach Anspruch 9, wobei die Datenoperation der ersten Transaktion eine Einfügungsoperation umfasst und das Protokoll einen der Einfügungsoperation entsprechenden primären Schlüssel umfasst, und das Verarbeitungsmodul (S230) ferner dafür ausgelegt ist, wenn der primäre Schlüssel in der Version der Zieldaten, die aktuell in dem Server gespeichert ist, nicht vorliegt, festzustellen, dass zwischen der Datenoperation der ersten Transaktion und der Version der Zieldaten, die aktuell in dem Server gespeichert ist, kein Datenkonflikt vorliegt.

11. Server nach Anspruch 9, wobei die Datenoperation der ersten Transaktion eine Aktualisierungsoperation oder eine Löschoperation umfasst und die Transaktionsübergabeanforderung ferner einen Zeitstempel der ersten Version umfasst, und das Verarbeitungsmodul (S230) ferner dafür ausgelegt ist, wenn ein Zeitstempel der Version der Zieldaten, die aktuell in dem Server gespeichert ist, mit dem Zeitstempel der ersten Version konsistent ist, festzustellen, dass zwischen der Datenoperation der ersten Transaktion und der Version der Zieldaten, die aktuell in dem Server gespeichert ist, kein Datenkonflikt vorliegt.

12. Server nach einem der Ansprüche 9 bis 11, wobei das Verarbeitungsmodul (S230) ferner dafür ausgelegt ist, nach dem Erhalten der übergebenen aktualisierten Version der Zieldaten einen neuen Zeitstempel für die übergebene aktualisierte Version der Zieldaten einzustellen.

13. Server nach einem der Ansprüche 9 bis 12, wobei das Sendemodul (S220) ferner dafür ausgelegt ist, wenn festgestellt wird, dass zwischen der Datenoperation der ersten Transaktion und der Version der Zieldaten, die aktuell in dem Server gespeichert ist, ein Datenkonflikt vorliegt, zu dem Client eine Antwort zu senden mit der Angabe, dass die Übergabe der ersten Transaktion ungültig ist.

14. Client (300), umfassend:
ein Verarbeitungsmodul (310), ausgelegt zum Erhalten einer Transaktionsanforderung, die das Ausführen einer ersten Transaktion anfordert, wobei die erste Transaktion basierend auf Zieldaten ausgeführt werden soll;
ein Sendemodul (320), ausgelegt zum Senden einer Datenbankzugriffsanforderung, die die Zieldaten anfordert, zu einem Server; und
ein Empfangsmodul (330), ausgelegt zum Empfangen einer ersten Version der Zieldaten, die von dem Server gesendet wird, wobei die erste Version eine Version der Zieldaten ist, die aktuell in dem Server gespeichert ist, und die Version der Zieldaten, die aktuell in dem Server gespeichert ist, eine zuletzt übergebene aktualisierte Version der Zieldaten ist, wobei
das Verarbeitungsmodul (310) ferner dafür ausgelegt ist, die erste Transaktion basierend auf der ersten Version der von dem Empfangsmodul (330) empfangenen Zieldaten durchzuführen; und
das Sendemodul (320) ferner ausgelegt ist zum Senden einer Transaktionsübergabeanforderung zu dem Server, nachdem das Verarbeitungsmodul (310) die erste Transaktion ausgeführt hat, wobei die Transaktionsübergabeanforderung die Übergabe der ersten Transaktion anfordert und die Transaktionsübergabeanforderung eine Protokollaufzeichnung einer Datenoperation der ersten Transaktion umfasst, sodass der Server die Version der Zieldaten, die aktuell in dem Server gespeichert ist, modifiziert, um eine übergebene aktualisierte Version der Zieldaten zu erhalten, wenn zwischen der Datenoperation der ersten Transaktion und der Version der Zieldaten, die aktuell in dem Server gespeichert ist, kein Datenkonflikt vorliegt;
wobei zwischen der Datenoperation der ersten Transaktion und der Version der Zieldaten, die aktuell in dem Server gespeichert ist, ein Datenkonflikt festgestellt wird, falls die Datenkonsistenz beschädigt wird, wenn die Version der Zieldaten, die aktuell in dem Server gespeichert ist, entsprechend der ersten Transaktion modifiziert wird.

15. Client (300) nach Anspruch 14, wobei die Datenoperation der ersten Transaktion eine Einfügungsoperation umfasst und das Protokoll einen der Einfügungsoperation entsprechenden primären Schlüssel umfasst.

## Revendications

1. Procédé de traitement de transaction de base de données, comprenant les étapes consistant à :
recevoir (S 120), par un serveur, une demande d'accès à une base de données, envoyée par un client, la demande d'accès à la base de données demandant des données cibles ;
envoyer (S130), par le serveur, une première version des données cibles au client sur la base de la demande d'accès à la base de données, la première version étant une version des données cibles qui sont actuellement stockées sur le serveur, et le serveur stockant uniquement une dernière version mise à jour et validée des données cibles ;
recevoir (S150), par le serveur, une demande de validation de transaction, envoyée par le client après l'exécution par le client d'une première transaction basée sur la première version des données cibles, la demande de validation de transaction demandant de valider la première transaction et la demande de validation de transaction comprenant un journal enregistrant une opération sur des données de la première transaction ; et
modifier (S170), par le serveur, la version des données cibles qui sont actuellement stockées sur le serveur, afin d'obtenir une version mise à jour et validée des données cibles quand il n'y a pas de conflit de données entre l'opération sur des données de la première transaction et la version des données cibles qui sont actuellement stockées sur le serveur ;
un conflit de données entre l'opération sur des données de la première transaction et la version des données cibles qui sont actuellement stockées sur le serveur étant déterminé si une cohérence de base de données est endommagée quand la version des données cibles qui sont actuellement stockées sur le serveur est modifiée selon la première transaction.

2. Procédé selon la revendication 1, l'opération sur des données de la première transaction comprenant une opération d'insertion, et le journal comprenant une clé primaire correspondant à l'opération d'insertion ; et le procédé comprenant en outre l'étape consistant à :
quand la clé primaire n'existe pas dans la version des données cibles qui sont actuellement stockées sur le serveur, déterminer, par le serveur, qu'il n'y a pas de conflit de données entre l'opération sur des données de la première transaction et la version des données cibles qui sont actuellement stockées sur le serveur.

3. Procédé selon la revendication 1, l'opération sur des données de la première transaction comprenant une opération de mise à jour ou une opération de suppression, et la demande de validation de transaction comprenant en outre un horodatage de la première version ; et le procédé comprenant en outre l'étape consistant à :
quand un horodatage de la version des données cibles qui sont actuellement stockées sur le serveur est cohérent avec l'horodatage de la première version, déterminer, par le serveur, qu'il n'y a pas de conflit de données entre l'opération sur des données de la première transaction et la version des données cibles qui sont actuellement stockées sur le serveur.

4. Procédé selon l'une quelconque des revendications 1 à 3, le procédé comprenant en outre, après l'obtention, par le serveur, d'une version mise à jour et validée des données cibles, l'étape consistant à :
définir, par le serveur, un nouvel horodatage pour la version mise à jour et validée des données cibles.

5. Procédé selon l'une quelconque des revendications 1 à 4, le procédé comprenant en outre l'étape consistant à :
quand il est déterminé qu'il y a un conflit de données entre l'opération sur des données de la première transaction et la version des données cibles qui sont actuellement stockées sur le serveur, envoyer, par le serveur au client, une réponse indiquant que la validation de la première transaction n'est pas valide.

6. Procédé de traitement de transaction de base de données, comprenant les étapes consistant à :
obtenir (S110), par un client, une demande de transaction demandant d'exécuter une première transaction, la première transaction devant être exécutée sur la base de données cibles ;
envoyer (S 120), par le client à un serveur, une demande d'accès à une base de données demandant les données cibles ;
recevoir (S130), par le client, une première version des données cibles qui sont envoyées par le serveur, la première version étant une version des données cibles qui sont actuellement stockées sur le serveur, et la version des données cibles qui sont actuellement stockées sur le serveur étant une dernière version mise à jour et validée des données cibles ;
exécuter (S 140), par le client, la première transaction sur la base de la première version des données cibles ; et
envoyer (S 150), par le client après l'exécution de la première transaction, une demande de validation de transaction au serveur, la demande de validation de transaction demandant de valider la première transaction et la demande de validation de transaction comprenant un journal enregistrant une opération sur des données de la première transaction, de sorte que le serveur modifie la version des données cibles qui sont actuellement stockées sur le serveur afin d'obtenir une version mise à jour et validée des données cibles quand il n'y a pas de conflit de données entre l'opération sur des données de la première transaction et la version des données cibles qui sont actuellement stockées sur le serveur ;
un conflit de données entre l'opération sur des données de la première transaction et la version des données cibles qui sont actuellement stockées sur le serveur étant déterminé si une cohérence de base de données est endommagée quand la version des données cibles qui sont actuellement stockées sur le serveur est modifiée selon la première transaction.

7. Procédé selon la revendication 6, dans lequel l'opération sur des données de la première transaction comprend une opération d'insertion, et le journal comprend une clé primaire correspondant à l'opération d'insertion.

8. Procédé selon la revendication 6, dans lequel l'opération sur des données de la première transaction comprend une opération de mise à jour ou une opération de suppression, et la demande de validation de transaction comprend en outre un horodatage de la première version.

9. Serveur (S200), comprenant :
un module de réception (S210), configuré pour recevoir une demande d'accès à une base de données, envoyée par un client, la demande d'accès à la base de données demandant des données cibles ;
un module d'envoi (S220), configuré pour envoyer une première version des données cibles au client sur la base de la demande d'accès à la base de données reçue par le module de réception, la première version étant une version des données cibles qui sont actuellement stockées sur le serveur, et le serveur stockant uniquement une dernière version mise à jour et validée des données cibles,
le module de réception (S210) étant en outre configuré pour recevoir une demande de validation de transaction, envoyée par le client après l'exécution par le client d'une première transaction basée sur la première version des données cibles, la demande de validation de transaction demandant de valider la première transaction et la demande de validation de transaction comprenant un journal enregistrant une opération sur des données de la première transaction ; et
un module de traitement (S230), configuré pour : modifier la version des données cibles qui sont actuellement stockées sur le serveur afin d'obtenir une version mise à jour et validée des données cibles quand il n'y a pas de conflit de données entre l'opération sur des données de la première transaction et la version des données cibles qui sont actuellement stockées sur le serveur ;
un conflit de données entre l'opération sur des données de la première transaction et la version des données cibles qui sont actuellement stockées sur le serveur étant déterminé si une cohérence de base de données est endommagée quand la version des données cibles qui sont actuellement stockées sur le serveur est modifiée selon la première transaction.

10. Serveur selon la revendication 9, dans lequel l'opération sur des données de la première transaction comprend une opération d'insertion, et le journal comprend une clé primaire correspondant à l'opération d'insertion ; et le module de traitement (S230) est en outre configuré pour : quand la clé primaire n'existe pas dans la version des données cibles qui sont actuellement stockées sur le serveur, déterminer qu'il n'y a pas de conflit de données entre l'opération sur des données de la première transaction et la version des données cibles qui sont actuellement stockées sur le serveur.

11. Serveur selon la revendication 9, dans lequel l'opération sur des données de la première transaction comprend une opération de mise à jour ou une opération de suppression, et la demande de validation de transaction comprend en outre un horodatage de la première version ; et le module de traitement (S230) est en outre configuré pour : quand un horodatage de la version des données cibles qui sont actuellement stockées sur le serveur est cohérent avec l'horodatage de la première version, déterminer qu'il n'y a pas de conflit de données entre l'opération sur des données de la première transaction et la version des données cibles qui sont actuellement stockées sur le serveur.

12. Serveur selon l'une quelconque des revendications 9 à 11, dans lequel le module de traitement (S230) est en outre configuré pour :
définir un nouvel horodatage pour la version mise à jour et validée des données cibles après l'obtention de la version mise à jour et validée des données cibles.

13. Serveur selon l'une quelconque des revendications 9 à 12, dans lequel le module d'envoi (S220) est en outre configuré pour :
quand il est déterminé qu'il y a un conflit de données entre l'opération sur des données de la première transaction et la version des données cibles qui sont actuellement stockées sur le serveur, envoyer, au client, une réponse indiquant que la validation de la première transaction n'est pas valide.

14. Client (300), comprenant :
un module de traitement (310), configuré pour obtenir une demande de transaction demandant d'exécuter une première transaction, la première transaction devant être exécutée sur la base de données cibles ;
un module d'envoi (320), configuré pour envoyer, à un serveur, une demande d'accès à une base de données demandant les données cibles ; et
un module de réception (330), configuré pour recevoir une première version des données cibles qui sont envoyées par le serveur, la première version étant une version des données cibles qui sont actuellement stockées sur le serveur, et la version des données cibles qui sont actuellement stockées sur le serveur étant une dernière version mise à jour et validée des données cibles,
le module de traitement (310) étant en outre configuré pour exécuter la première transaction sur la base de la première version des données cibles reçues par le module de réception (330) ; et
le module d'envoi (320) étant en outre configuré pour : envoyer une demande de validation de transaction au serveur après l'exécution de la première transaction par le module de traitement (310),
la demande de validation de transaction demandant de valider la première transaction et la demande de validation de transaction comprenant un journal enregistrant une opération sur des données de la première transaction, de sorte que le serveur modifie la version des données cibles qui sont actuellement stockées sur le serveur afin d'obtenir une version mise à jour et validée des données cibles quand il n'y a pas de conflit de données entre l'opération sur des données de la première transaction et la version des données cibles qui sont actuellement stockées sur le serveur ;
un conflit de données entre l'opération sur des données de la première transaction et la version des données cibles qui sont actuellement stockées sur le serveur étant déterminé si une cohérence de base de données est endommagée quand la version des données cibles qui sont actuellement stockées sur le serveur est modifiée selon la première transaction.

15. Client (300) selon la revendication 14, dans lequel l'opération sur des données de la première transaction comprend une opération d'insertion, et le journal comprend une clé primaire correspondant à l'opération d'insertion.
